# EUROPÄISCHE PATENTSCHRIFT

(11) **EP 0 635 672 B1**
(45) Veröffentlichungstag und Bekanntmachung des Hinweises auf die Patenterteilung: **12.11.1997**
(21) Anmeldenummer: 93250212.3
(22) Anmeldetag: 20.07.1993
(51) Int. Cl.: F17C 1/16, B29C 53/60, B29C 45/14, B29C 53/82

(54) **Druckluftbehälter und Verfahren zu seiner Herstellung**
Compressed-air vessel and method for its production
Réservoir à air comprimé et procédé pour son fabrication

(43) Veröffentlichungstag der Anmeldung: 25.01.1995
(73) Patentinhaber: Landgraf, Rainer, Dipl.jur.Dipl.agr, D-15517 Fürstenwalde (DE)
(72) Erfinder: Landgraf, Rainer, Dipl.-jur., Dipl.-agr., D-15517 Fürstenwalde (DE); Stürmer, Oskar, D-15517 Fürstenwalde (DE)
(74) Vertreter: Hannig, Wolf-Dieter, Dipl.-Ing.

(56) Entgegenhaltungen:
- EP-A- 0 157 699
- EP-A- 0 333 013
- EP-A- 0 345 450
- EP-A- 0 353 850
- EP-A- 0 465 252
- WO-A-84/03065
- KUNSTSTOFFE Bd. 82, Nr. 7 , Juli 1992 , MüNCHEN Seiten 586 - 590 XP287691 HAUCK 'Faserverstärkte Spritzgu - Bauteile optimal auslegen'

## Beschreibung

Die Erfindung betrifft einen Druckluftbehälter aus Kunststoff für Bremskraftanlagen und pneumatische Hilfseinrichtungen an Lastkraftwagen, Trucks, Omnibusse und Schienenfahrzeuge u.ä., mit einem spritzgeformten Liner aus Thermoplast, in dem Öffnungen für Anschlußmuffen vorgesehen sind und einer auf dem Liner angeordneten, im Kreuzverbund verlegten Armierungsschicbt, die ihrerseits mit einer unverlierbaren Hülle aus Thermoplast versehen ist (siehe z.B. EP-A-0 345 450).

Die Erfindung betrifft ferner ein Verfahren zur Herstellung derartiger Druckbehälter.

Druckbehälter für Nutzkraftfahrzeuge klassischer Art sind mechanischen Beanspruchungen durch Fahrzeugvibrationen, UV-Bestrahlung durch das Sonnenlicht, Frost und Kälte sowie einer ständig an- und abschwellenden Druckbeanspruchung unterworfen. Deshalb stellen Druckbehälter äußerst hohe technische und technologische Anforderungen an die verwendeten Einsatzwerkstoffe, wie beispielsweise hohe Zähigkeiten auch bei niedrigen Temperaturen, hohe Schlag- bzw. Bruchfestigkeit vorrangig bei dynamischer Beanspruchung, vorzugsweise bei Überdrücken von 8,5 bis 14 bar. Druckbehälter müssen eine Mindestlebensdauer von wenigstens 15 Jahren erreichen, Medienbeständigkeit gegen Schwitzwasser im Inneren und gegen mechanische Einflüsse auf das Äußere des Behälters besitzen.

Um die Eigenschaftsgewährleistung bei diesen komplexen Beanspruchungen zu erreichen, legt die DIN EN 286 "Einfache unbefeuerte Druckbehälter aus Stahl- Druckluftbremsanlage und pneumatische Hilfseinrichtungen in Schienenfahrzeuge" und die DIN 74 281 "Druckluftbehälter" fest, daß die Behälter aus unlegiertem Stahl bestehen müssen und einwandig sind. Diese Druckbehälter sind bekanntlich aus einem kreiszylindrischen Teil, Mantel genannt, und zwei nach außen gewölbten, torisspärischen Böden zusammegesetzt. Die Einzelteile werden durch Umformarbeitsgänge geformt und nach einer Vorreinigung mittels Fügen, beispielsweise Schweißen, zusammengefügt.
Nach einer weiteren Reinigung der Innen- und Außenflächen mit anorganischen Wasch- und Spülmitteln erfolgt ein Aufbringen eines inneren und äußeren Korrosionsschutzes, der im wesentlichen mit lösungsmittelhaltigen Farben ausgeführt wird.
Die klassische Druckbehälterfertigung ist fertigungsintensiv und verursacht erhebliche Umweltbelastungen. Die Lärmbelästigung beim Umformen, beispielsweise das Tiefziehen der Böden-oder das Walzen der Mantelzarge, sowie die beim Schweißen entstehenden Schweißdämpfe führen zu einer Dauerbelastung für die Umwelt. Reinigungs- und Lösungsmittel sind nur mit hohem Aufwand und Sondermaßnahmen zu beseitigen, wobei immer ein Rest an Sondermüll anfällt. Der Wasserverbrauch für die Reinigung und die Prüfung dieser bekannten Druckbehälter ist hoch.
Die metallischen Einsatzwerkstoffe für diese bekannten Druckbehälter haben außerdem ein relativ hohes Gewicht. Der bekannte Stand der Technik nach der DD-PS 254 537 A1 versucht dem gewichtsmäßigen Nachteil dadurch zu begegnen, daß hochfeste und korrosionsträge Stähle eingesetzt werden.
Die zuvor aufgezeigten Nachteile der klassischen Druckluftbehälterfertigung bleiben aber auch für die bekannte Lehre gemäß DD-PS 254 537 A1 erhalten.

Bei einem bekannten Verfahren (DE-PS 25 16 395) zur Herstellung eines Druckbehälters aus einem im wesentlichen zylindrischen eigentlichen Behälter aus Aluminium mit im wesentlichen zylindrischen halbkugligen Endabschnitten wird der zylindrische Teil mit abwechselnd polar und in Umfangsrichtung orientierten Wicklungsanordnungen und einer Harzbeschichtung versehen, wobei sich sämtliche Wicklungen in einem vorbelasteten Zustand befinden, in dem Druckkräfte auf die äußere Wicklungsanordnung ausgeübt werden. Die in
Umfangsrichtung orientierten Wicklungsanordnungen erstrecken sich über die Verbindungsbereiche zwischen dem zylindrischen Abschnitt und den halbkugligen Abschnitten des eigentlichen Aluminiumbehälters.

Durch die DE-OS 39 22 577 ist ein Druckluftbehälter aus faserverstärktem Kunststoff, insbesondere für Druckluft-Bremsanlagen von Kraftfahrzeugen, bekannt, der aus einem zylindrischen Mittelabschnitt und zwei durch Klebung längs eines Überlappungsbereiches damit verbundenen Deckeln besteht. Die Deckel sind Preßteile und der Mittelabschnitt ist ein Wickelteil.

Die DE-PS 34 26 158 offenbart einen Druckbehälter aus faserverstärktem Kunststoff mit zylindrischem Mittelteil und an die Ebenen des Mittelteiles sich anschließenden Domen, wobei die Wandung des zylindrischen Mittelteiles zur Erhöhung seiner Druckbeständigkeit mit einer dem Behälterinneren zugewandten verstärkenden Schicht aus mit wärmehärtendem Harz verklebten Kohlenstoffäden versehen ist. Die verstärkende Schicht ist rein zylinderförmig ausgebildet und über den gesamten Mittelteil des Druckbehälters angeordnet. Zwischen der Druckbehälterwandung des Mittelteiles und der verstärkenden Schicht befindet sich eine Zwischenschicht aus elastomeren Material, die auch die Übergangsstelle zwischen Mittelteil und den Domen überdeckt.

Die Nachteile dieser bekannten Druckluftbehälter sind darin begründet, daß einerseits an der klassischen Herstellungsmethode eines mehrteilig gefügten Behälterkörpers festgehalten wird, was fertigungstechnisch sehr aufwendig und für eine Massenproduktion kaum geeignet ist, sowie andererseits die Wickelverfahren Zusatzstoffe wie Styrole, Härter und Beschleuniger bzw. Kleber verwenden, wodurch die Umweltbelastungen eher erhöht als gesenkt werden. Fügeabschnitte zwischen den Böden und dem eigentlichen zylindrischen Behälterteil sind außerdem durch die laufende dynamische Beanspruchung extrem bruchgefährdet.

Ferner führt das Wickeln und Verstärken des Mittelsteiles zu zusätzlichen Aufwendungen an Betriebseinrichtungen, Material und Kosten.

Nach der EP 0 345 450 A1 wird außerdem ein Kunststoffbehälter für Flüssigkeiten oder Gase durch Extrusionsblasen hergestellt. Dieser bekannte Behälter hat einen einstückigen Liner aus modifiziertem Polyphenylenoxid (PPO) oder Polypropylen (PP), der nahtlos ausgebildet ist, also weder Schweiß- noch Quetschnähte aufweist, um Zug- und Biegebeanspruchungen gleichmäßig auf den Liner zu verteilen.
Auf diesem Liner befindet sich eine auf annähernd geodetischen Linien verlegte Glasfaserschicht mit einer Ummantelung aus Thermoplasten oder Reaktionsharzen ohne einen Gehalt an monomeren Styrol oder der Liner wird mit Glasfasern umwickelt, deren äußerste vom Liner beabstandete Schichten mit härtbaren Reaktionsharzen oder Thermoplasten versehen sind. Als Reaktionsharze werden ungesättigte Polyester, insbesondere PMMA, EP oder POR, als Thermoplaste PPO und PP, insbesondere PTFE, PSU oder PI, eingesetzt.
Zwischen Liner und Glasfaserschicht ist für den Fall stark wechselnder Drücke zusätzlich eine Pufferschicht aus einer Matrix aus Reaktionsharzen oder Thermoplasten mit einem Gehalt an Glasfasern von etwa 20 bis 40% in Form von Kurzfasern gelegt.
Ein solcher Mehrschichtbehälter ist zwar als ortsfester Speicher geeignet, hohen Druckbeanspruchungen zu widerstehen, hat aber auf Grund der verwendeten Werkstoffe keine ausreichende Tieftemperaturzähigkeit bei schlagartiger und dynamischer Beanspruchung wie sie bei Bremsluftbehältern an Fahrzeugen im Betrieb auftreten. Außerdem können Polymethacrylate (PMMA) wegen ihrer Brennbarkeit und ihrer geringen Härte nicht als Konstruktionswerkstoff im Fahrzeugbau eingesetzt werden.

Ein weiterer Nachteil besteht darin, daß durch die Anwendung einer Pufferschicht zusätzlich zu der Armierungsschicht und der verwendeten Reaktionsharze der Gewichtsvorteil eines Kunststoffbehälters relativiert wird.
Außerdem erschwert die Einstückigkeit des Liners die Recyclingfähigkeit.

Aus der EP 0 157 699 A2 ist ein für Biere, Lebensmittel, Kosmetika, Arzeneimittel und Liköre biaxial orientierter Behälter aus thermoplastischem Harz bekannt, das 0,3 bis 10 Gewichtsprozent Glasfasern enthält.
Als thermoplastisches Harz wird Polyethyleneterephthalat eingesetzt. Die Glasfasern besitzen eine Länge von 1 bis 6 mm.
Polyethyleneterephthalat (PET) ist ein zur Thermoplaste gehörender Polyester mit hoher Steifigkeit und Härte, die zwar für Dauereinsatztemperaturen von bis zu etwa 100 °C als geeignet angegeben werden, jedoch aber bereits von heißem Wasser bei weitaus tieferen Temperaturen angegriffen werden. Dieser Werkstoff ist infolge seines Fließverhaltens für Druckbehälter mit dynamischer und schlagartiger Beanspruchung (auf- und abschwellende Lasten) nicht geeignet.

Hohlkörper aus Kunststoffen wie Flaschen, Behälter etc. werden bisher ausschließlich im Blasverfahren hergestellt, wobei hierzu Thermoplaste verwendet werden. Diese bekannten Hohlkörper entsprechen jedoch bisher nicht den komplexen technischen und technologischen Anforderungen, die an Werkstoffe für Druckgefäße gestellt werden, so daß diese Verfahren nur ausschließlich auf die Herstellung von Verpackungsbehältern beschränkt ist. Dieser Erkenntnis wird auch die Lösung gemäß EP 0 333 013 A1 gerecht, die einen Druckbehälter beschreibt, der aus einem im Spritzgußverfahren oder Schleudergußverfahren hergestellten, gasdichten einstückigen Liner aus Thermoplaste, wie Polyethylen, Polypropylen, Polyamid, Nylon oder aus Aluminium besteht. Dieser Liner muß, um den wechselnden Druckbeanspruchungen gerecht zu werden, an seinem Mittel- und an seinen Endteilen mit imprägnierten Glasfaserbandwicklungen verstärkt werden. Für die Imprägnierung des Glasfaserbandes ist Epoxydharz bzw. ungesättigter Polyesterharz vorgesehen.

Bei diesem Stand der Technik liegt der Erfindung die Aufgabe zugrunde, einen Druckbehälter der eingangs genannten Gattung zu schaffen, der die komplexe Eigenschaftsgewährleistung im Druckbehälterbau auch für Kunststoffwerkstoffe bei voller Recyclingfähigkeit ermöglicht und der die Werkstoffvorteile der Kunststoffwerkstoffe wie Wegfall von Korrosionsschutzmaßnahmen, Einsparung an Gewicht und die wesentliche Verbesserung der Automatisierbarkeit bei der Herstellung von Druckluftbehältern zur Geltung bringt.

Dies wird bei dem Druckbehälter der eingangs genannten Art dadurch gelöst, daß der Liner aus mehreren Teilen, aus mit kurzen Glasfasern verstärktem Polypropylen (PP) oder Polyamid (PA) nicht nahtlos, aber formschlüssig zusammengesetzt ist, und daß die Hülle aus mit Glas- und/oder Kohlefasern bis 50 mm Länge verstärkten und mit Füllstoffen versetzten Polypropylen (PP) oder Polyamid (PA) oder modifizierten Polyphenylether (PPE) oder Polyphenylsulfid (PPS) oder Polyetherimid (PEI) besteht.

Die Armierungsschicht für den Liner besteht aus unter 55° zueinander gewickelten Glasfasern oder Metalldrähten oder Drahtgeflecht mit oder ohne Tränkung, wobei für den Fall der Tränkung vorzugsweise Caprolactam verwendet wird.

Durch die Umwicklung kann die Langzeitstabilität der verwendeten Thermoplaste verbessert werden, indem die in der Polymatrix stattfindenden Fließprozesse begrenzt werden, so daß auf eine Ausrichtung der Kurzfasern in der Polymatrix in Spritzrichtung verzichtet werden kann.

Stabilität kann aber ebensogut erreicht werden, wenn beim Spritzguß die Fasern in Spritzrichtung orientiert eingelagert werden, so daß sich die Faserenden verhaken können und nicht frei zu liegen kommen, wodurch den gefährlichen Spannungsüberhöhungen an den Faserenden entgegengewirkt wird. Dies erbringt den wesentlichen Vorteil, daß die Armierungsschicht in ihrer Dicke verringert werden kann.

In einer bevorzugten Ausführungsform der Erfindung besteht der Liner und die Hülle aus werkstoffgleichem Kunststoff.
Ebensogut kann der Liner und die Hülle auch aus werkstoffverschiedenem Kunststoff bestehen.

Erfindungsgemäß beträgt der Füll- und Faseranteil im Kunststoff des Liners und der Hülle bis zu 30%.
Als Füllstoff können in Ausbildung des Erfindungsgedankens die Füllstoffe aus Graphit oder Talkum oder Gesteinsmehl oder deren Mischungen bestehen. Weiterhin ist es möglich, daß die Fasern im Liner und in der Hülle werkstoffgleich oder werkstoffverschieden sind, so daß ohne weiteres unterschiedliche Werkstoffe für Liner, Hülle und Fasern entsprechend den vorliegenden Beanspruchungsanforderungen kombiniert werden können.

In einer weiteren bevorzugten Ausgestaltung der Erfindung sind in den Liner die Anschlußmuffen eingeformt, die die entsprechenden Armaturen und Ventile aufnehmen.
Die Aufnahme kann sowohl als Schraubverbindung als auch als Steckverbindung gewählt sein.

Der Erfindung zufolge ist der Liner aus mehreren Teilen, beispielsweise aus Böden und Mantel oder Böden mit angespritztem Mantel, ausgebildet, wobei die Teile miteinander flüssigkeitsdicht durch Formschluß gefügt sind.
Der Formschluß zwischen den Teilen wird durch eine zugleich auf Zug und Druck beanspruchbare Verzahnung erreicht.

Die äußere Oberfläche des Mantels des Liners kann vorteilhafterweise mit einer Struktur versehen werden, die so ausgerichtet ist, daß die ersten Lagen der Armierungsschicht beim Umwickeln gegen seitliches Verrutschen gesichert werden.

Die Aufgabe wird weiterhin dadurch gelöst, daß der Liner aus mit kurzen Glasfasern verstärktem Propylen oder Polyamid in mehreren, durch Formschluß fügbaren Teilen hergestellt wird, und daß ein Granulat aus faser- und füllstoffverstärktem Polypropylen (PP), Polyamid (PA), modifiziertem Polyphenylether (PPE), Polyphenylensulfid (PPS) oder Polyetherimid (PEI) zum Spritzen der Hülle verwendet wird, wobei als Verstärkung Glas- und/oder Kohlefasern mit einer Länge bis 50 mm, vorzugsweise 20 mm, eingesetzt werden.

Für den Fall, daß Polypropylen zum Einsatz kommt, werden mit Vorteil Glasfasern mit chemischer Kopplung verwendet.

In besonderer Ausgestaltung des erfindungsgemäßen Verfahrens dient als imkrompressibles Medium im Liner Wasser oder Öl, vorzugsweise Wasser, das ermöglicht, den Spritzdruck ohne Deformation des Liners aufzunehmen. Mit Vorteil wird dieses Medium bei der dem Fertigungsvorgang nachgeschalteten Sicherheitsdruckprobe als Prüfmedium verwendet.

Durch alle diese Merkmale wird erreicht, daß der erfindungsgemäße spritzgegossene Druckbehälter aus Kunststoff den komplexen Beanspruchungen im Fahrbetrieb gerecht wird und die geforderten komplexen Gebrauchseigenschaften sicher gewährleistet werden.

Der erfindungsgemäße Druckbehälter unterliegt keiner Korrosion, so daß der innere und äußere Korrosionsschutz, beispielsweise durch Farbauftrag, entfällt, wodurch außerdem aufwendige Entsorgungsmaßnahmen der in den Farben enthaltenen Lösungsmittel eingespart werden können. Gesonderte Wasserkreiskreisläufe mit den damit einhergehenden Kosten für Gebläse, Pumpen, Rohrleitungen einschließlich der hierfür notwendigen Betriebsmittel sind nicht mehr erforderlich.

Die erfindungsgemäßen Druckbehälter aus Kunststoff besitzen gegenüber den Stahlbehältern und auch gegenüber gewickelten Kunststoffbehältern ein wesentlich geringeres Gewicht. Dies ermöglicht die Verringerung des Fahrzeuggewichtes, senkt den spezifischen Kraftstoffverbrauch oder gestattet die Erhöhung der Zuladung.

Außerdem sind die erfindungsgemäßen Druckbehälter aus Kunststoff wartungsfrei, weil keine Korrosionsprodukte entstehen, so daß sich auch die Reinigungs- und Wartungszyklen der Bremsanlagen erhöhen.

Das erfindungsgemäße Verfahren gestattet es ferner, einen weit höheren Automatisierungsgrad bei der Druckbehälterfertigung zu erreichen, und daß die Herstellung von Einzelteilen durch aufwendige Umformvorgänge und umweltbelastender, energieintensiver Fügemethoden dieser Teile, wie das Schweißen, vollständig entfallen kann.

Weitere Vorteile, Einzelheiten und erfindungswesentliche Merkmale ergeben sich aus der nachfolgenden Beschreibung der Erfindung unter Bezugnahme auf die beigefügten Zeichnungen.

Es zeigen:

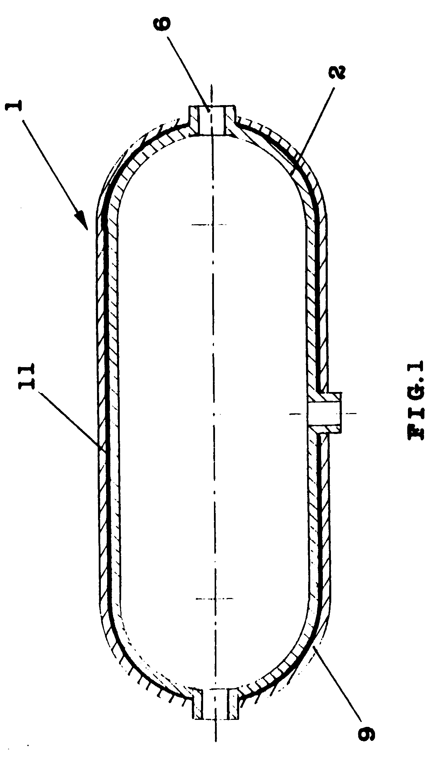

- Fig. 1: eine Schnittdarstellung des erfindungsgemäßen Druckbehälters und,

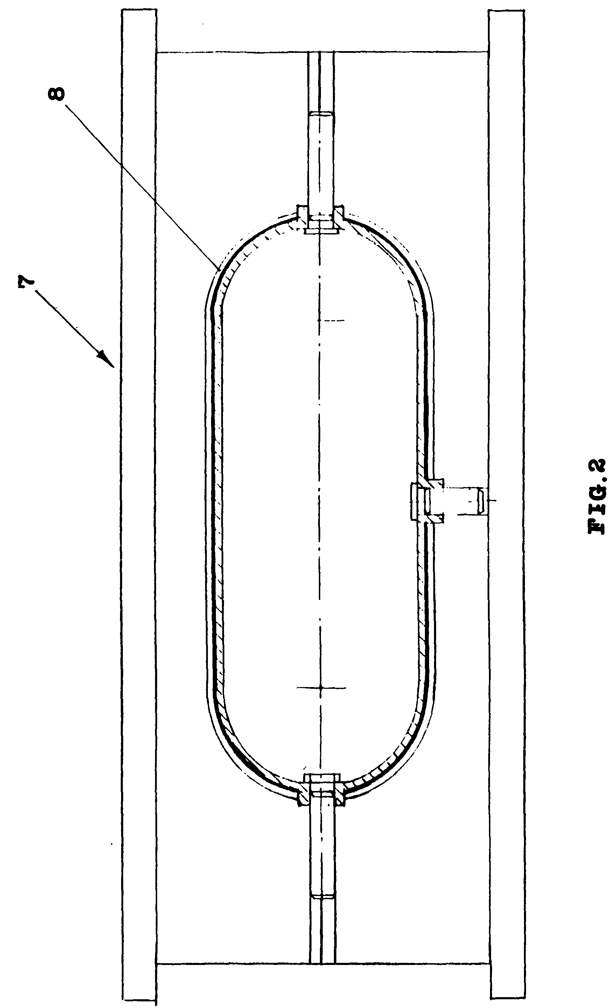

- Fig. 2: eine Schnittdarstellung eines Liners im Spritzgießwerkzeug.

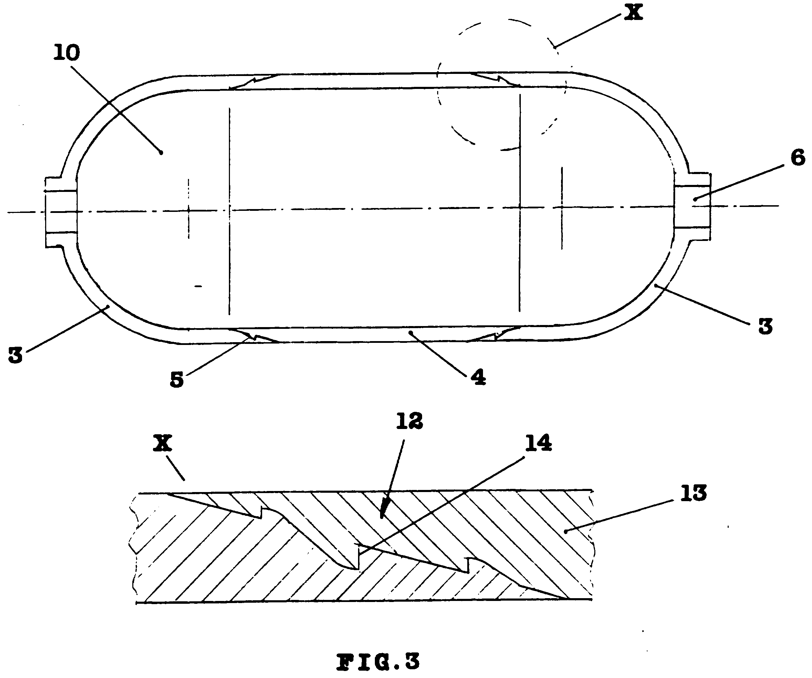

- Fig. 3: einen mehrteilig gefügten Liner.

Der erfindungsgemäße Druckbehälter 1 besteht aus einem Liner bzw. Grundkörper 2, der mit dem bekannten Spritzverfahren mehrteilig aus Kunststoff gefertigt ist.

Der mehrteilige Liner 2 besteht aus zwei gleichen Teilen, jeweils einen Boden 3 mit angespritzem Mantelteil 4, der eine aus mehreren Zähnen 14 bestehende, gegeneinander auf Zug und Druck beanspruchbare Verzahnung 12 aufweist. Der Mantelteil 4 besitzt an seinen Enden jeweils ebenfalls eine zu der Verzahnung 12 entsprechend ausgebildete Verzahnung, die den Formschluß 5 zwischen den Teilen herstellt. Die Flüssigkeitsdichtheit des Formschlusses 5 wird erreicht, indem beispielsweise die Verzahnung verklebt wird.

In den Mantelteil 4 und den Böden 3 werden die Anschlußmuffen 6 bereits beim Spritzen eingeformt. Dies geschieht vorteilhafterweise durch Einlegen der Muffen vor dem Spritzen.
In den Liner 2 wird nunmehr Wasser als inkrompressibles Medium 10 durch die Anschlußmuffen 6 lufteinschlußfrei eingefüllt und derselbe dann flüssigkeitsdicht verschlossen.

Dieser Liner erhält anschließend eine Armierungsschicht 11, die aus im Kreuzverbund unter etwa 55° zueinander gewickelten ungetränkten Glasfasern.

Der so vorbereitete Liner 2 wird sodann in eine entsprechend vorbereitete, aus zwei Teilen bestehende, schließbare Form 7 eingelegt. Die angeformten Anschlußmuffen 6 dienen als Abstandshalter in der Form 7. Die Höhe dieser Abstandhalter bestimmt zugleich auch die Dicke der Hülle 9.
Die Form 7 besitzt eine einzige Einspritzstelle, durch die der Kunststoff in den verbleibenden Zwischenraum 8 von Liner 2 und Form 7 bei Temperaturen von wenigstens 250 °C und Spritzdrücken von mindestens 200 bar eingespritzt wird. Die Spritzrichtung ist so orientiert, daß der Liner 2 von der Einspritzstelle aus den Liner 2 gerichtet umfließt, wobei die Spritzrichtung radial oder tangential zum Liner 2 eingestellt werden kann. An den Verbindungsstellen von Boden 3 und Mantelteil 4, an denen erfahrungsgemäß Spannungsspitzen durch die Überlagerung von tagentialen und radialen Beanspruchungen auftreten, ist die Spritzrichtung so eingestellt, daß eine Kreuzung in der Stromrichtung erfolgt.

Nach dem Einspritzen des Kunststoffes ist der armierte Liner 2 mit der Hülle 9 allseitig und unverlierbar umschlossen.

Als Kunststoff-Ausgangsmaterial für das Einspritzen sind füllstoff- und faserverstärkte Granulate aus Polypropylen, Polyamid, modifiziertes Polyphenylether, Polyphenylensulfid und Polyetherimid gleichermaßen geeignet. Der Glasfaseranteil und Füllstoffanteil im Kunststoff beträgt wenigstens 30%, wobei die Fasern annähernd eine Länge von 20 mm besitzen.
Als Fasern können auch Kohlefasern zum Einsatz kommen. Füllstoffe sind Graphit, Talkum oder Gesteinsmehl ebenso wie auch Gemische derselben.

Durch das orientierte Einspritzen des Kunststoffes an der Einspritzstelle richten sich die Fasern in der flüssigen Kunststoffmasse in Spritzrichtung aus, so daß sich die Fasern einerseits verhaken und andererseits radial oder tangential zum Liner 2 angeordnet sind. In den Bereichen der Spannungsspitzen wird so eine Kreuzung der Fasern erzielt.

Je nach Beanspruchungsart, Größe und gewählter Form der Druckbehälter kann der Liner 1 und die Hülle 9 werkstoffgleich oder auch werkstoffverschieden sein. Alle möglichen Kombinationen der genannten Kunststoffe sind möglich

Ein 20-Liter-Druckbehälter 1 für Bremsluftanlagen soll nach dem erfindungsgemäßen Verfahren in einem Stück in einem Spritzgießautomaten aus Polyphenylensulfid (PPS) hergestellt werden. Der Außendurchmesser dieses Behälters beträgt 246 mm und die Gesamtlänge 500 mm.
Der gewählte Kunststoff hat einen Faser- und Füllstoffanteil von annähernd 32%. Dieser Kunststoff erreicht in einigen für den Druckbehälterbau für Fahrzeuge wesentlichen Eigenschaften folgende Werte:

| | |
|---|---|
| Strukturformel | /NH-(CH₂)₆-NH-CO-(CH₂)₄CO/ₙ aus Adipinsäure und Hexamethylendiamin |
| Dichte | 1,21 bis 1,60 g/cm³ |
| Zugfestigkeit | 150 N/mm² |
| Wärmeformbeständigkeit | kurzfristig bis 200 °C |
| Schlagzähigkeit: | 95 KJ/m² |

Aufstellung der verwendeten Bezugszeichen
- 1: Druckbehälter
- 2: Liner
- 3: Böden
- 4: Manteilteil
- 5: Formschlußstelle
- 6: Anschlußmuffen
- 7: Form
- 8: Zwischenraum
- 9: Hülle
- 10: inkrompressibles Medium
- 11: Armierungsschicht
- 12: Verzahnung
- 13: Linerwandung
- 14: Zähne

## Patentansprüche

1. Druckluftbehälter aus Kunststoff für Bremskraftanlagen und pneumatische Hilfseinrichtungen an Lastkraftwagen, Trucks, Omnibussen, Schienenfahrzeuge u.ä., mit einem spritzgußgeformten Liner aus Thermoplast, in dem Öffnungen für Anschlußmuffen vorgesehen sind und einer auf dem Liner angeordneten, im Kreuzverbund verlegten Armierungsschicht, die ihrerseits mit einer unverlierbaren Hülle aus Thermoplast versehen ist,
**dadurch gekennzeichnet,**
daß der Liner **(2)** aus mehreren Teilen, aus mit kurzen Glasfasern verstärktem Polypropylen **(PP)** oder Polyamid **(PA)** nicht nahtlos, aber formschlüssig zusammengesetzt ist, und daß die Hülle **(9)** aus mit Glas-und/ oder Kohlefasern bis 50 mm Länge verstärktem und mit Füllstoffen versetztem Polypropylen **(PP)** oder Polyamid **(PA)** oder modifizierten Polyphenylether **(PPE)** oder Polyphenylsulfid **(PPS)** oder Polyetherimid **(PEI)** besteht.

2. Druckluftbehälter nach Anspruch 1,
**dadurch gekennzeichnet,**
daß die Armierungsschicht aus unter etwa 55° zueinander gewickelten Glasfasern oder Metalldrähten oder Drahtgerflecht besteht.

3. Druckluftbehälter nach Anspruch 1,
**dadurch gekennzeichnet,**
daß Liner **(2)** und Hülle **(9)** jeweils aus werkstoffgleichem Kunststoff bestehen.

4. Druckluftbehälter nach Anspruch 1,
**dadurch gekennzeichnet,**
daß Liner **(2)** und Hülle **(9)** jeweils aus werkstoffverschiedenem Kunststoff bestehen.

5. Druckluftbehälter nach Anspruch 1,
**dadurch gekennzeichnet,**
daß der Faser- und Füllstoffanteil im Liner **(2)** und in der Hülle **(9)** bis zu 30% beträgt.

6. Druckluftbehälter nach Anspruch 1,
**dadurch gekennzeichnet,**
daß die Fasern im Liner **(2)** und in der Hülle **(9)** jeweils werkstoffgleich sind.

7. Druckluftbehälter nach Anspruch 1,
**dadurch gekennzeichnet,**
daß die Fasern im Liner **(2)** und in der Hülle **(9)** jeweils werkstoffverschieden sind.

8. Druckluftbehälter nach Anspruch 5,
**dadurch gekennzeichnet,**
daß der Füllstoff aus Graphit oder Talkum oder Gesteinsmehl oder deren Mischungen besteht.

9. Druckluftbehälter nach Anspruch 1,
**dadurch gekennzeichnet,**
daß die Linerteile miteinander flüssigkeitsdicht durch Formschluß gefügt sind.

10. Druckluftbehälter nach Anspruch 1 und 9,
**dadurch gekennzeichnet,**
daß der Formschluß als eine zugleich auf Zug und Druck beanspruchbare Verzahnung (12) der Linerwandung ausgebildet ist.

11. Druckluftbehälter nach Anspruch 1,
**dadurch gekennzeichnet,**
daß die Oberfläche des Liners **(2)** eine Oberflächenstruktur für die Aufnahme der Armierungsschicht **(11)** aufweist.

12. Verfahren zur Herstellung von Druckluftbehältern nach Anspruch 1, bei dem zunächst ein Liner (2) aus Polypropylen (PP) oder Polyamid (PA) gespritzt wird, der Liner mit einer Armierungsschicht im Kreuzverband aus Fasern bewickelt, mit einem imkompressiblen Medium lufteinschlußfrei gefüllt und in eine Form für die Herstellung der Hülle verbracht, und dann mit Thermoplast umspritzt oder umgossen wird,
**dadurch gekennzeichnet,**
daß der Liner **(2)** aus mit kurzen Glasfasern verstärktem Polypropylen oder Polyamid in mehreren durch Formschluß fügbaren Teilen **(3, 4)** hergestellt wird, und daß ein Granulat aus faser- und füllstoffverstärktem Polypropylen **(PP)**, Polyamid **(PA)**, modifiziertem Polyphenylether **(PPE)**, Polyphenylensulfid **(PPS)** oder Polyetherimid **(PEI)** für das Spritzen der Hülle verwendet wird, wobei als Verstärkung Glas- und/oder Kohlefasern mit einer Länge bis 50 mm, vorzugsweise 20 mm, eingesetzt werden.

13. Verfahren nach Anspruch 12,
**dadurch gekennzeichnet,**
daß für Polypropylen **(PP)** Glasfasern mit chemischer Kopplung verwendet werden.

14. Verfahren nach Anspruch 12,
**dadurch gekennzeichnet,**
daß die Armierungsschicht **(12)** im Wickelverfahren in Richtung der Oberflächenstruktur des Liners **(2)** ungetränkt oder getränkt aufgebracht wird.

15. Verfahren nach Anspruch 14,
**dadurch gekennzeichnet,**
daß zur Tränkung der Glasfasern vorzugsweise Caprolactam verwendet wird.

16. Verfahren nach Anspruch 12 bis 15,
**dadurch gekennzeichnet,**
daß das imkompressible Medium **(10)** zugleich als Prüfmedium bei der Sicherheitsdruckprobe am fertiggestellten Druckluftbehälter verwendet wird.

## Claims

1. Compressed-air reservoir of plastic for air brake assemblies and pneumatic auxiliary mechanisms on lorries, trucks, buses, rail vehicles and the like, consisting of an injection-moulded liner of thermoplastic material which is provided with openings for connecting sleeves, and a reinforcing fibre mattress placed on the liner, which in turn is provided with a captive jacket of thermoplastic material,
**wherein**
the liner **(2)** consists of several components of polypropylene **(PP)** or polyamide **(PA)** reinforced with short glass fibres, assembled not seamless but form-fit, and the jacket **(9)** consists of polypropylene **(PP)** or polyamide **(PA)** or modified polyphenyl ether **(PPE)** or polyphenyl sulphide **(PPS)** or polyether imide **(PEI)** reinforced with glass fibres and/or carbon fibres of up to 50 mm length and mixed with fillers.

2. Compressed-air reservoir as set forth in Claim 1,
**wherein**
the reinforcing mattress consists of glass fibres or metal wires - wound at an angle of about 55° to each other - or of wire mesh.

3. Compressed-air reservoir as set forth in Claim 1,
**wherein**
liner **(2)** and jacket **(9)** consist of identical plastic material.

4. Compressed-air reservoir as set forth in Claim 1,
**wherein**
liner **(2)** and jacket **(9)** consist of different plastic material.

5. Compressed-air reservoir as set forth in Claim 1,
**wherein**
liner **(2)** and jacket **(9)** contain up to 30 % of fibres and filler.

6. Compressed-air reservoir as set forth in Claim 1,
**wherein**
the fibres in the liner **(2)** and the jacket **(9)** are of identical material.

7. Compressed-air reservoir as set forth in Claim 1,
**wherein**
the fibres in the liner **(2)** and the jacket **(9)** are of different material.

8. Compressed-air reservoir as set forth in Claim 5
**wherein**
the filler consists of graphite or talcum or powdered rock or the mixtures thereof.

9. Compressed-air reservoir as set forth in Claim 1,
**wherein**
the liner components are joined form-fit to make them liquid-proof.

10. Compressed-air reservoir as set forth in Claims 1 and 9, **wherein**
the form-fit joint is designed as serration **(12)** of the liner walling, withstanding both tension and compression.

11. Compressed-air reservoir as set forth in Claim 1,
**wherein**
the suface of the liner **(2)** has a structure that can hold the reinforcing fibre mattress **(11)**.

12. Method for the manufacture of compressed-air reservoirs as set forth in Claim 1, with first a liner **(2)** being injection-moulded from polypropylene **(PP)** or polyamide **(PA)**, which is then wrapped with a mattress of cross-braced fibres for reinforcement, filled with an incompressible medium avoiding air inclusions, brought into a form for manufacture of the jacket, and then embedded in thermoplastic material through injection or casting,
**wherein**
the liner **(2)** is made of several components **(3, 4)** of polypropylene or polyamide which are reinforced with short glass fibres and can be joined form-fit, and granular material of polypropylene **(PP)**, polyamide **(PA)**, modified polyphenyl ether **(PPE)**, polyphenyl sulphide **(PPS)** or polyether imide **(PEI)**- reinforced with fibres and fillers - is used for injection-moulding of the jacket, the reinforcement being made of glass fibres and/or carbon fibres of up to 50 mm length, preferably 20 mm.

13. Method as set forth in Claim 12,
**wherein**
for polypropylene **(PP)** chemically-coupled glass fibres are used.

14. Method as set forth in Claim 12,
**wherein**
the reinforcing fibre mattress **(11)** is wrapped - either impregnated or non-impregnated - around the liner **(2)** following its surface structure.

15. Method as set forth in Claim 14,
**wherein**
preferably caprolactam is used for impregnation of the glass fibres.

16. Method as set forth in Claims 12 through 15,
**wherein**
the incompressible medium **(10)** is also used as test medium in the hydraulic pressure test performed on the finished compressed-air reservoir.

## Revendications

1. Réservoir à air comprimé en matière plastique pour servocommandes de freinage et mécanismes auxiliaires pneumatiques sur camions, poids-lourds, autobus, véhicules sur rails, etc., comportant une chemise thermoplastique moulée par injection et dans laquelle sont prévues des réservations pour manchons de raccordement, ainsi qu'une couche d'armature posée en plis croisés sur la chemise et munie de son côté d'une gaine thermoplastique imperdable,
**caractérisé en ce que**
la chemise **(2)** est composée de plusieurs éléments de polypropylène **(PP)** ou de polyamide **(PA)** renforcé aux fibres de verre courtes, qui sont assemblés, non pas sans joints, mais par fermeture géométrique, et que la gaine **(9)** consiste de polypropylène **(PP)**, ou de polyamide **(PA)**, ou de polyphényléther **(PPE)**, ou de sulfure de polyphényle **(PPS)**, ou de polyétherimide **(PEI)** modifiés, renforcés aux fibres de verre et/ou de carbone longues jusqu'à 50 mm et renfermant des charges.

2. Réservoir à air comprimé selon la revendication 1,
**caractérisé en ce que**
la couche d'armature consiste de fibres de verre, ou de fils ou treillis métalliques posés sous un angle d'environ 55° les uns par rapport aux autres.

3. Réservoir à air comprimé selon la revendication 1,
**caractérisé en ce que**
la chemise **(2)** et la gaine **(9)** consistent d'une matière plastique de composition identique.

4. Réservoir à air comprimé selon la revendication 1,
**caractérisé en ce que**
la chemise **(2)** et la gaine **(9)** consistent de matières plastiques de composition différente.

5. Réservoir à air comprimé selon la revendication 1,
**caractérisé en ce que**
le taux de fibres et de charges incorporées dans la chemise **(2)** et la gaine **(9)** va jusqu'à 30 %.

6. Réservoir à air comprimé selon la revendication 1,
**caractérisé en ce que**
les fibres incorporées dans la chemise **(2)** et la gaine **(9)** sont de composition identique.

7. Réservoir à air comprimé selon la revendication 1,
**caractérisé en ce que**
les fibres incorporées dans la chemise **(2)** et la gaine **(9)** sont de composition différente.

8. Réservoir à air comprimé selon la revendication 5,
**caractérisé en ce que**
la charge consiste de graphite, de talc ou de farine minérale, ou de leurs mélanges.

9. Réservoir à air comprimé selon la revendication 1,
**caractérisé en ce que**
les éléments de chemise sont unis par fermeture géométrique de façon à assurer l'étanchéité aux liquides.

10. Réservoir à air comprimé selon les revendications 1 et 9, **caractérisé en ce que**
la fermeture géométrique s'obtient par un assemblage à dents **(12)** des éléments de la paroi de chemise, qui peut être sollicité à la fois à la traction et à la compression.

11. Réservoir à air comprimé selon la revendication 1,
**caractérisé en ce que**
la texture superficielle de la chemise **(2)** convient pour recevoir la couche d'armature **(11)**.

12. Procédé de fabrication de réservoirs à air comprimé selon la revendication 1, consistant d'abord à mouler par injection une chemise **(2)** de polypropylène **(PP)** ou de polyamide **(PA)**, à armer la chemise d'une couche de plis croisés de fibres, à la remplir d'un fluide incompressible exempt d'inclusions d'air et à la placer dans un moule pour l'application de la gaine, et ensuite à l'envelopper d'une gaine thermoplastique par surmoulage ou coulée,
**caractérisé en ce que**
la chemise **(2)** est confectionnée en plusieurs éléments **(3, 4)** faits de polypropylène ou de polyamide renforcé aux fibres de verre courtes et pouvant être unis par fermeture géométrique, et que l'on met en oeuvre pour le moulage de la gaine, un granulé de polypropylène **(PP)** ou polyamide **(PA)** renforcé aux fibres et charges, ou de polyphényléther **(PPE)**, sulfure de polyphényle **(PPS)** ou polyphénylimide **(PEI)** modifié, tout en employant comme renfort, des fibres de verre et/ou de carbone longues jusqu'à 50 mm et de préférence de 20 mm.

13. Procédé selon la revendication 12,
**caractérisé en ce que**
dans le cas du polypropylène **(PP)**, l'on met en oeuvre des fibres de verre couplées chimiquement.

14. Procédé selon la revendication 12,
**caractérisé en ce que**
la couche d'armature **(11)** est posée par enroulage, avec ou sans imprégnation, suivant la texture superficielle de la chemise **(2)**.

15. Procédé selon la revendication 14,
**caractérisé en ce que**
l'on utilise préférentiellement du caprolactame pour l'imprégnation des fibres de verre.

16. Procédé selon les revendications 12 à 15,
**caractérisé en ce que**
le fluide incompressible **(10)** sert également de fluide d'essai pour l'épreuve de pression à laquelle sera soumis le réservoir à air comprimé après son achèvement.
